# EUROPEAN PATENT SPECIFICATION

(11) **EP 3 216 555 B1**
(45) Date of publication and mention of the grant of the patent: **26.09.2018**
(21) Application number: 17160366.5
(22) Date of filing: 10.03.2017
(51) Int. Cl.: B23P 19/00, A45D 40/00, B65G 47/80, B65G 47/244, B65G 29/00

(54) **MACHINE FOR ORIENTING CASES ADAPTED TO CONTAIN CRAYONS**
MASCHINE ZUM AUSRICHTEN VON BEHÄLTERN ZUR ZUR AUFNAHME VON KOSMETIKSTIFTEN
MACHINE POUR ORIENTER DES BOÎTIERS ADAPTÉS À CONTENIR DE CRAYONS

(30) Priority: 11.03.2016 IT UA20161591
(43) Date of publication of application: 13.09.2017
(73) Proprietor: CMI Engineering S.r.l., 20123 Milano (IT)
(72) Inventor: COMOLI, Franco, 28050 POMBIA (NO) (IT)
(74) Representative: Di Gennaro, Sergio

(56) References cited:
- FR-A1- 2 451 320
- IT-A1- MI20 100 247
- US-A- 3 270 405
- US-A1- 2009 218 193
- DATABASE WPI Week 201120 Thomson Scientific, London, GB; AN 2011-C02994 XP002763702, -& KR 2011 0001491 U (AMOREPACIFIC CORP) 11 February 2011 (2011-02-11)

## Description

The present invention relates to a machine for orienting cases adapted to contain crayons of cosmetic or medicinal products known as sticks, such as for example lipsticks, lip glosses or packages of lip balm, etc. Such machines are disclosed in IT MI20 100 247 A1 and KR 2011 0001491 U.

To produce lipsticks or lip balms sticks, carousel forming machines are currently known. On the carousel, or rotary table, of these machines there is fixed and moved a plurality of silicone-material moulds, *per se* known and called in jargon "ogives".

By rotating around a vertical axis, the carousel moves the silicone moulds from a casting station to a stripping station and vice versa.

After the stripping station, the formed crayons are implanted on cases which contain them and which are in the form of a cylinder having a cylindrical base portion adapted to serve as gripping element for the user and a second tapered cylindrical portion inside of which the crayon is contained. Usually, when the stick is sold, such second portion is closed by a cap.

The second portion provides for its upper end to be blunt, like also the contained crayon which has the same bluntness.

Clearly this means that in the step of inserting the crayon into the case, to facilitate the operation, it is advantageous to have all cases with the bevel oriented in the same manner.

Such operation currently is performed manually after the cases are loaded into the machine with random orienting.

Naturally, performed in this manner, such operation is laborious, slow and not very accurate. Moreover, once the bevels are oriented, if the machine provides further movements of the case, the manual orienting may be lost due to vibrations and stresses that the machine may provide.

The object of the present invention is to obviate the aforementioned drawbacks by providing a machine for automatically orienting such cases for containing crayons, such as lipsticks, lip glosses, lip balms, etc. This object is achieved by a machine having the features of appended claim 1.

Further preferred features of the machine are subject of the appended dependent claims.

The advantages achievable with the present invention will be more apparent to the person skilled in the art from the following detailed description of a particular non-limiting embodiment, illustrated with reference to the following diagrammatical drawings:
- figures 1a-c show a case with retracted crayon, with the crayon in extended position and without the crayon (only case), respectively;
- figure 2 shows a schematic perspective assembly view of the machine according to the present invention;

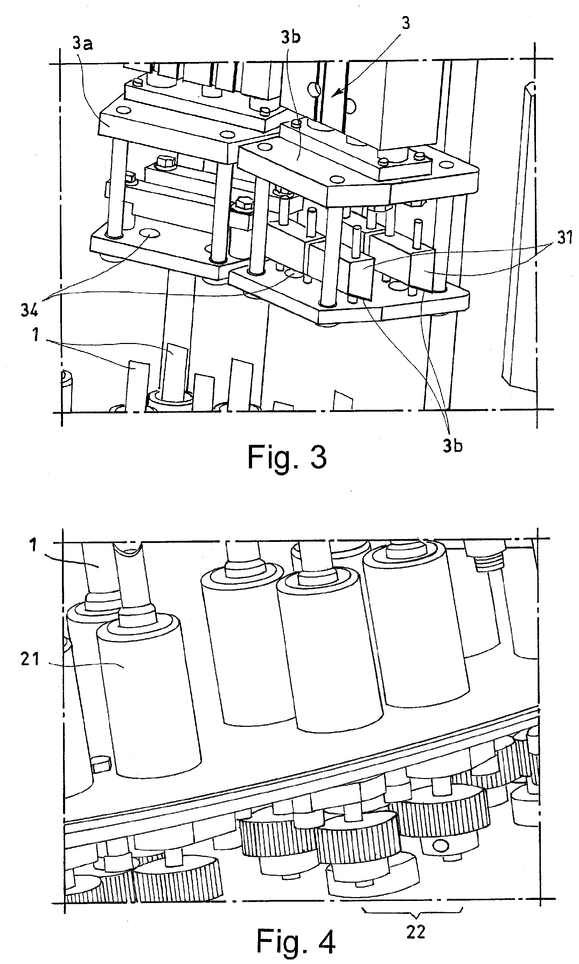

- figure 3 illustrates the orienting heads of a first orienting station;
- figure 4 schematically illustrates a portion of the machine in a perspective view, which allows seeing below the resting plane of the cases.

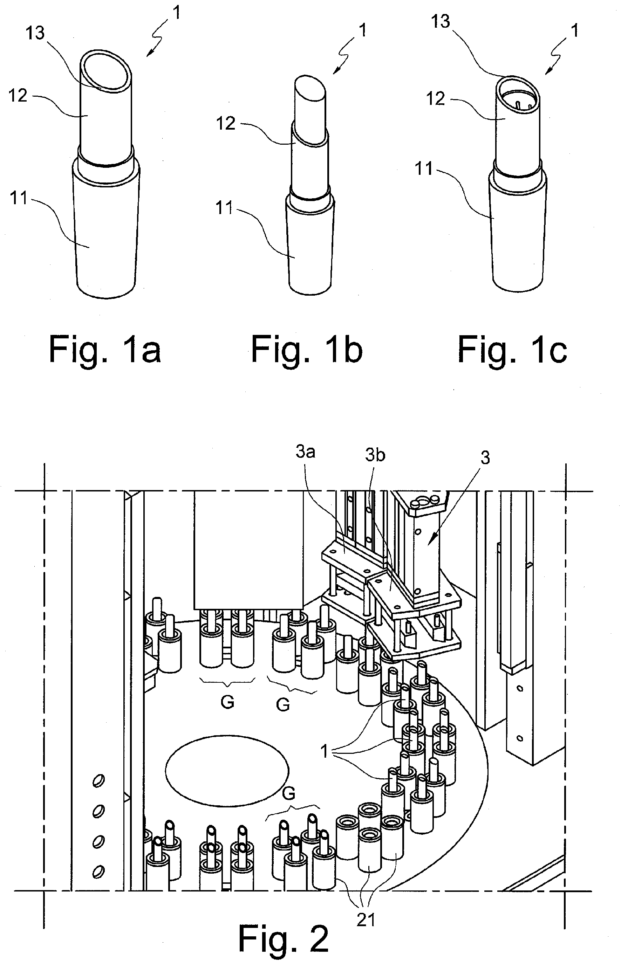

With reference to figures 1a-c, the stick comprises the crayon and the case 1 formed by a cylindrical base portion 11 adapted to act as gripping element for the user, and a substantially cylindrical tapered upper portion 12, inside of which the crayon is contained.

The second portion has its upper end 13 blunt and inclined, like also the crayon which has the same bluntness.

The machine according to the present invention comprises a base plate 2, preferably circular in shape, capable of rotating around its vertical axis. On such plate are positioned a series of housings 21, preferably hollow cylindrical in shape, so as to form bushings inside of which the case 1 is positioned.

Such bushings leave the upper portion of the case exposed and are capable of rotating on themselves around a vertical axis due to rotation mechanisms 22 which preferably are below such plate 2, causing also the case to rotate inside of them. The friction between the inner walls of the bushing and the outer walls of the lower portion of the case is not high, therefore allowing a relative movement in the orienting step between case and bushing.

The bushings are organized in consecutive groups G, in the case illustrated groups of four cases arranged along the circumference of such plate. When the plate goes into rotation, the groups move and transit below a first orienting station 3 comprising at least one vertically movable orienting head, so as to descend on the groups of cases positioned suitably and to guide them, and then to ascend and disengage from them.

Preferably, the first station comprises a pair of orienting heads 3a and 3b side-by-side each other.

Each head comprises at least one template 31 having an inclined lower surface 32, adapted to abut the bevel of the upper portion of the case when the head is lowered.

At the same time, the bushing is alternately moved clockwise and counterclockwise. Thereby, such motion and the abutment of the template with the bevel result in the two inclined surfaces coupling, thus orienting the bevels of the all the cases in the same direction.

Preferably, each head has several templates arranged on parallel rows; in the example illustrated there are two templates which correspond to the groups of four cases arranged on two rows. Moreover, a plate 33 is provided on the lower part of each template, having a plurality of holes 34 in which, when the head is lowered, the plate is fit on the upper portion of the case, thus favouring the vertical alignment thereof.

The numbering and positioning of each group of cases positioned on the work plane corresponds to the size of each head. The pair of heads side-by-side advantageously is capable of intercepting two consecutive groups of cases.

According to a further feature of the present invention, there is provided a second final alignment station, placed downstream of said first station and placed close to a station for forming the stick inside of which the crayon is inserted in the suitably oriented case.

Such second station substantially is similar to the first and provides at least one template having an inclined lower surface substantially like the upper end 13 of the machine.

In such second station, the bushings inside the already oriented cases do not move because it is assumed that the misalignments between the first and the second station may be of small entity in terms of degrees.

The machine operates in the following manner: the first step provides inserting the cases inside the bushings with random orienting. The rotation movement brings the groups of cases not yet oriented below the first station, in which the heads orientate the cases in view of the descent of the template whose inclined surface 32 abuts the upper end 13 of each case. The alternating movement of the bushing allows the case to be aligned with the template; the case reaches a stable position and no longer rotates when the two surfaces match.

Such alignment step occurs preferably in two parts.

Indeed, in a preferred embodiment, there are two heads of such station and they operate on two adjacent groups of cases positioned on the work plane, while the advancing pitch on the plane itself of the groups corresponds to the size of a single head. Thereby, on a first group of cases, the first station performs a pre-alignment with the first head of the pair, then the plane rotates by a pitch and the first group is aligned by the second head, while a second group adjacent to and following the first group is pre-aligned by the first head. Thereby, a same group is orientated twice for increased certainty.

Finally, the already oriented groups undergo a last fine alignment, without the bushing rotates, in the second station, which serves to possibly realign those cases which due to the effect of the vibrations or stresses in general, may be slightly rotated.

A suitable positioning of the first station and the second station may be the one of spacing them by an angle of 60° around the work plane.

## Claims

1. Machine for orienting cases adapted to contain crayons of cosmetic or medicinal products, known as "sticks", said cases being formed by a cylindrical base portion (11) and by a substantially cylindrical tapered upper portion (12) inside which the crayon is contained, such crayon having a blunt and inclined upper end (13),
such machine comprising
• a base plate (2), capable of rotating around its vertical axis, a series of housings (21), or bushings, being positioned on such plate that are capable of rotating on themselves around a vertical axis thereof, inside which the cases are inserted,
• such bushings being organized in groups (G) arranged consecutively along the perimeter of such work plane,
• a first orienting station comprising at least one vertically movable orienting head (3), capable of descending on at least one group (G) of suitably positioned cases and orienting them while the bushings rotate.

2. Machine according to claim 1, wherein such head (3) comprises at least one template (31) having an inclined lower surface (32), adapted to abut the bevel (13) of the upper portion of the case when the head is lowered, while the bushing is alternately moving clockwise and counterclockwise.

3. Machine according to claim 1, wherein, the first station comprises a pair of orienting heads (3a,3b) side by side each other.

4. Machine according to claim 2, wherein each head has several templates arranged on parallel rows.

5. Machine according to claim 2, wherein a plate (33) is provided on the lower part of each template (33), having a plurality of holes (34) in which, when the plate is lowered, the plate is fit on the upper portion (12) of the case favouring the vertical alignment thereof.

6. Machine according to claim 3, wherein the pair of heads operates on two adjacent groups of cases, such that, on a first group of cases, the first station effects a pre-alignment with the first head of the couple, then the plane rotates by a pitch corresponding with the size of one head bringing the first group below the second head (3b), while a second group adjacent and following the first group is pre-aligned by the first head (3a).

7. Machine according to claim 1, further comprising a second final alignment station placed downstream of said first station comprising at least one template having a lower surface substantially inclined like the upper end of the case, which performs a final alignment during such step the bushings with the already oriented cases therein do not move.

8. Machine according to claim 1, wherein such work plane is circumferential.

9. Machine according to claim 8, wherein a suitable positioning of the first station and the second station is with the stations spaced a 60° angle around the work plane.

10. Machine according to claim 1, wherein the rotation mechanisms of the bushings are placed under the work plane.

## Patentansprüche

1. Maschine zum Ausrichten von Behältern zur Aufnahme von Kosmetikstiften oder medizinischen Produkten, die als "Sticks" bezeichnet werden, wobei die Behälter durch einen zylindrischen Basisabschnitt (11) und einen im Wesentlichen zylindrischen, sich verjüngenden, oberen Abschnitt (12) gebildet sind, in dem der Stift aufgenommen wird, welcher Stift ein stumpfes und schräges oberes Ende (13) aufweist, wobei die Maschine Folgendes umfasst:
• eine Basisplatte (2), die in der Lage ist, sich um ihre vertikale Achse zu drehen, eine Reihe von Aufnahmen (21) oder Hülsen, die auf der Platte angeordnet und in der Lage sind, sich um sich selbst um ihre vertikale Achse zu drehen, in die die Behälter eingesteckt sind,
• wobei die Hülsen in Gruppen (G) organisiert sind, die hintereinander längs des Umfangs einer derartigen Arbeitsebene angeordnet sind,
• eine erste Ausrichtstation, umfassend wenigstens einen vertikal beweglichen Ausrichtkopf (3), der in der Lage ist, auf wenigstens eine Gruppe (G) von angemessen positionierten Behältern zu sinken und sie während des Drehens der Hülsen auszurichten.

2. Maschine nach Anspruch 1, wobei der Kopf (3) wenigstens eine Schablone (31) mit einer geneigten unteren Fläche (32) umfasst, die dazu geeignet ist, an der Abschrägung (13) des oberen Abschnitts des Behälters anzustoßen, wenn der Kopf abgesenkt ist, während die Hülse sich abwechslungsweise im Uhrzeigersinn bzw. im Gegenuhrzeigersinn bewegt.

3. Maschine nach Anspruch 1, wobei die erste Station ein Paar von nebeneinander angeordneten Ausrichtköpfen (3a,3b) umfasst.

4. Maschine nach Anspruch 2, wobei jeder Kopf mehrere Schablonen aufweist, die auf parallelen Reihen angeordnet sind.

5. Maschine nach Anspruch 2, wobei eine Platte (33) auf dem unteren Teil einer jeden Schablone (31) vorgesehen ist, die eine Mehrzahl von Bohrungen (34) aufweist, in die bei abgesenkter Platte die Platte auf dem oberen Abschnitt (12) des Behälters eingepasst ist, wodurch die vertikale Ausrichtung desselben erleichtert wird.

6. Maschine nach Anspruch 3, wobei das Paar von Köpfen auf zwei benachbarten Gruppen von Behältern wirkt, derart, dass auf einer ersten Gruppe von Behältern die erste Station eine Vor-Ausrichtung auf den ersten Kopf des Paares vornimmt, woraufhin die Ebene sich um einen Abstand dreht, der der Größe eines Kopfes entspricht und die erste Gruppe unter den zweiten Kopf (3b) bringt, während eine zweite, benachbarte und auf die erste Gruppe folgende Gruppe durch den ersten Kopf (3a) vorausgerichtet wird.

7. Maschine nach Anspruch 1, weiter umfassend eine zweite abschließende Ausrichtstation, die stromabwärts der ersten Station angeordnet ist und wenigstens eine Schablone mit einer unteren Fläche umfasst, die im Wesentlichen wie das obere Ende des Behälters geneigt ist, welcher eine abschließende Ausrichtung während eines derartigen Schrittes vornimmt, wobei die Hülsen mit den darin befindlichen, bereits ausgerichteten Behältern sich nicht bewegen.

8. Maschine nach Anspruch 1, wobei eine derartige Arbeitsebene umlaufend ist.

9. Maschine nach Anspruch 8, wobei eine angemessene Positionierung der ersten Station und der zweiten Station bei Beabstandung der Stationen im Winkel von 60° rund um die Arbeitsebene erhalten ist.

10. Maschine nach Anspruch 1, wobei die Drehmechanismen der Hülsen unter der Arbeitsebene angeordnet sind.

## Revendications

1. Machine pour orienter des boîtiers adaptés à contenir des crayons de produits cosmétiques ou de médicaments, connus comme des « bâtons », lesdits boîtiers étant formés par une portion de base cylindrique (11) et par une portion supérieure conique sensiblement cylindrique (12) à l'intérieur de laquelle le crayon est contenu, ce crayon ayant une extrémité supérieure émoussée et inclinée (13),
cette machine comprenant
• une plaque de base (2), capable de tourner autour de son axe vertical, une série de logements (21), ou fourreaux, étant positionnée sur cette plaque, qui sont capables de tourner autour d'un axe vertical de ceux-ci, à l'intérieur desquels les boîtiers sont insérés,
• ces fourreaux étant organisés en groupes (G) agencés consécutivement le long du périmètre de ce plan de travail,
• une première station d'orientation comprenant au moins une tête d'orientation mobile verticalement (3), capable de descendre sur au moins un groupe (G) de boîtiers positionnés de manière appropriée et de les orienter alors que les fourreaux tournent.

2. Machine selon la revendication 1, dans laquelle cette tête (3) comprend au moins un gabarit (31) ayant une surface inférieure inclinée (32), adaptée pour jouxter le biseau (13) de la portion supérieure du boîtier quand la tête est descendue, alors que le fourreau se déplace alternativement dans le sens des aiguilles d'une montre et dans le sens contraire des aiguilles d'une montre.

3. Machine selon la revendication 1, dans laquelle, la première station comprend une paire de têtes d'orientation (3a, 3b) situées côte à côte.

4. Machine selon la revendication 2, dans laquelle chaque tête comporte plusieurs gabarits agencés sur des rangées parallèles.

5. Machine selon la revendication 2, dans laquelle une plaque (33) est disposée sur la partie inférieure de chaque gabarit (31), ayant une pluralité de trous (34) dans lesquels, quand le gabarit est descendu, la plaque est ajustée sur la portion supérieure (12) du boîtier en favorisant son alignement vertical.

6. Machine selon la revendication 3, dans laquelle la paire de têtes agit sur deux groupes adjacents de boîtiers, de manière que, sur un premier groupe de boîtiers, la première station effectue un pré-alignement avec la première tête de la paire, puis le plan tourne d'un pas correspondant à la taille d'une tête en amenant le premier groupe au-dessous de la deuxième tête (3b), alors qu'un deuxième groupe adjacent et suivant le premier groupe est pré-aligné par la première tête (3a).

7. Machine selon la revendication 1, comprenant en outre une deuxième station d'alignement final placée en aval de ladite première station comprenant au moins un gabarit ayant une surface inférieure sensiblement inclinée comme l'extrémité supérieure du boîtier, qui effectue un alignement final, durant cette étape, les fourreaux avec les boîtiers déjà orientés à l'intérieur ne se déplacent pas.

8. Machine selon la revendication 1, dans laquelle ledit plan de travail est circonférentiel.

9. Machine selon la revendication 8, dans laquelle un positionnement approprié de la première station et de la deuxième station est avec les stations espacées d'un angle de 60° autour du plan de travail.

10. Machine selon la revendication 1, dans laquelle les mécanismes de rotation des fourreaux sont placés au-dessous du plan de travail.
